# EUROPEAN PATENT SPECIFICATION

(11) **EP 3 385 326 B1**
(45) Date of publication and mention of the grant of the patent: **06.05.2020**
(21) Application number: 16870735.4
(22) Date of filing: 30.11.2016
(51) Int. Cl.: C08L 27/18, C08J 3/03, C08K 5/06, C08K 5/095, C08L 71/02, C09D 5/02, C09D 127/18

(54) **AQUEOUS POLYTETRAFLUOROETHYLENE DISPERSION**
WÄSSRIGE POLYTETRAFLUORETHYLENDISPERSION
DISPERSION AQUEUSE DE POLYTÉTRAFLUOROÉTHYLÈNE

(30) Priority: 01.12.2015 JP 2015235104
(43) Date of publication of application: 10.10.2018
(73) Proprietor: AGC Inc., Tokyo 100-8405 (JP); AGC Chemicals Europe, Limited, Thornton-Cleveleys, Lancashire FY5 4QD (GB)
(72) Inventor: KOBAYASHI, Shigeki, Tokyo 100-8405 (JP); NAGAI, Hiroki, Tokyo 100-8405 (JP); HIGUCHI, Shinya, Tokyo 100-8405 (JP); TANAKA, Akiko, Tokyo 100-8405 (JP); TAKAZAWA, Masahiro, Tokyo 100-8405 (JP); MORGOVAN-ENE, Ariana Claudia, Thornton-Cleveleys Lancashire FY5 4QD (GB); WADE, Anthony Eugene, Thornton-Cleveleys Lancashire FY5 4QD (GB); CAINE, Diane, Thornton-Cleveleys Lancashire FY5 4QD (GB)
(74) Representative: Müller-Boré & Partner Patentanwälte PartG mbB
(86) International application number: PCT/JP2016/085617
(87) International publication number: WO 2017/094798

(56) References cited:
- EP-A1- 1 731 534
- EP-A1- 1 849 829
- WO-A1-2006/086796
- WO-A1-2007/046482
- WO-A1-2011/046186
- JP-A- 2006 523 758
- JP-A- 2009 161 616
- US-A1- 2007 015 864
- US-A1- 2007 043 164

## Description

### TECHNICAL FIELD

The present invention relates to a polytetrafluoroethylene (hereinafter referred to as PTFE) aqueous dispersion.

### BACKGROUND ART

Usually PTFE is prepared by an emulsion polymerization method of polymerizing tetrafluoroethylene (hereinafter referred to as TFE) using an emulsifier in an aqueous medium. According to such an emulsion polymerization method, an aqueous emulsion having PTFE particles dispersed in an aqueous medium will be obtained. Such an aqueous emulsion is unstable with a low viscosity and is likely to form coagulum.

Patent Document 1 discloses a method wherein to such an aqueous emulsion, a nonionic surfactant is added as a dispersing agent for stabilization, optionally followed by concentration, to obtain a PTFE aqueous dispersion with good mechanical stability.

Such a PTFE aqueous dispersion may, for example, be used in a method wherein it is impregnated, coated or screen-printed to a substrate, in the form of an aqueous dispersion. Further, it may be used in the form of a paint having its high viscosity by adding a thickening agent or a surface modifier, to form a relatively thick coatings.

### PRIOR ART DOCUMENTS

### PATENT DOCUMENTS

Patent Document 1: WO2007/046482 Aqueous fluoropolymer dispersions are also known from EP 1849829 A1, EP 1731534 A1, US 2007/0043164 A1 and US 2007/00415864 A1

### DISCLOSURE OF INVENTION

### TECHNICAL PROBLEM

According to the findings of the present inventors, the PTFE aqueous dispersion obtainable by the method disclosed in Patent Document 1 has good mechanical stability even though its viscosity is low, but it may sometimes have a problem of foaming by a shear force such as stirring, and thus, further improvement is desired.

It is an object of the present invention to provide a PTFE aqueous dispersion which is excellent in mechanical stability, while being not susceptible to foaming.

### SOLUTION TO PROBLEM

The present invention provides a PTFE aqueous dispersion having the following constructions [1] to [12].
[1] A polytetrafluoroethylene aqueous dispersion characterized by comprising from 15 to 70 mass% of polytetrafluoroethylene particles having an average primary particle size of from 0.1 to 0.5 µm, from 0.1 to 20,000 ppm, to the mass of the above polytetrafluoroethylene particles, of a fluorinated emulsifier selected from the group consisting of C₄₋₇ fluorinated carboxylic acids which may have an etheric oxygen atom, and salts thereof, from 1 to 20 parts by mass, per 100 parts by mass of the above polytetrafluoroethylene particles, of a nonionic surfactant represented by the following formula (1), from 0.01 to 3.0 parts by mass, per 100 parts by mass of the above polytetrafluoroethylene particles, of a compound represented by the following formula (2), and water,

   R¹-O-A-H (1)

   wherein R¹ is a C₈₋₁₈ alkyl group, and A is a polyoxyalkylene chain composed of an average repeating number of from 5 to 20 oxyethylene groups and an average repeating number of from 0 to 2 oxypropylene groups, 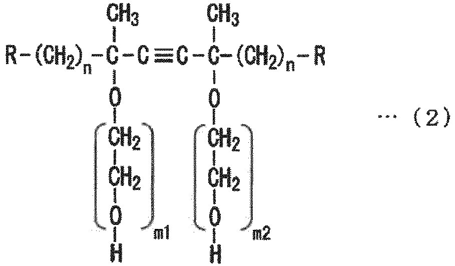 wherein R is a C₂₋₄ alkyl group, n is 1 or 2, and m₁ and m₂ are each independently an average repeating number of oxyethylene groups, provided that the total of m₁ and m₂ is from 1 to 6.
[2] The polytetrafluoroethylene aqueous dispersion according to [1], which has a viscosity of from 3 to 300 mPa·s at 23°C.
[3] The polytetrafluoroethylene aqueous dispersion according to [1] or [2], wherein in the formula (2), R is -CH(CH₃)₂.
[4] The polytetrafluoroethylene aqueous dispersion according to any one of [1] to [3], wherein the fluorinated emulsifier is a fluorinated emulsifier selected from the group consisting of C₄₋₇ fluorinated carboxylic acids having from 1 to 4 etheric oxygen atoms, and salts thereof.
[5] The polytetrafluoroethylene aqueous dispersion according to any one of [1] to [4], wherein in the formula (1), the number of carbon atoms in R¹ is from 10 to 16, and A is a polyoxyalkylene chain composed of an average repeating number of from 7 to 12 oxyethylene groups and an average repeating number of from 0 to 2 oxypropylene groups.
[6] The polytetrafluoroethylene aqueous dispersion according to any one of [1] to [5], wherein the nonionic surfactant represented by the formula (1) is contained in an amount of from 2 to 8 parts by mass per 100 parts by mass of the above polytetrafluoroethylene particles.
[7] The polytetrafluoroethylene aqueous dispersion according to any one of [1] to [6], wherein in the formula (2), the total of m₁ and m₂ is from 1 to 5.
[8] The polytetrafluoroethylene aqueous dispersion according to any one of [1] to [7], wherein in the formula (2), the total of m₁ and m₂ is from 1 to 4.
[9] The polytetrafluoroethylene aqueous dispersion according to any one of [1] to [8], wherein the compound represented by the formula (2) is contained in an amount of from 0.05 to 2.0 parts by mass per 100 parts by mass of the above polytetrafluoroethylene particles.
[10] The polytetrafluoroethylene aqueous dispersion according to any one of [1] to [9], wherein in the formula (2), n is 2, and the total of m₁ and m₂ is 4.
[11] The polytetrafluoroethylene aqueous dispersion according to any one of [1] to [10], wherein the above polytetrafluoroethylene particles are particles of a non-melt-moldable polytetrafluoroethylene.
[12] The polytetrafluoroethylene aqueous dispersion according to [11], wherein the above polytetrafluoroethylene particles are particles of a modified polytetrafluoroethylene wherein the content of structural units based on comonomers to all structural units is at most 0.5 mass%.

### ADVANTAGEOUS EFFECTS OF INVENTION

The PTFE aqueous dispersion of the present invention is excellent in mechanical stability and at the same time has such a characteristic that it is hardly susceptible to foaming. In the present invention, "hardly susceptible to foaming" means not foaming, or even if foamed, foams will promptly disappear. Hereinafter, it may be referred to also as a low-foaming characteristic.

### BRIEF DESCRIPTION OF DRAWINGS

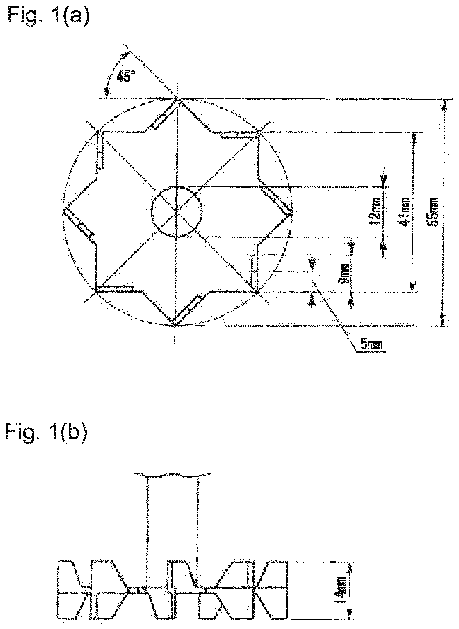

Fig. 1 shows a stirring blade used for evaluation of the mechanical stability and low-foaming characteristic, wherein (a) is a plan view as viewed from above, and (b) is a side view.

### DESCRIPTION OF EMBODIMENTS

The following terms have the following meanings.

The "average primary particle size" means the median diameter on a volume basis obtained by measuring particle sizes of PTFE particles in the PTFE aqueous dispersion by a laser scattering method particle size distribution analyzer.

The "standard specific gravity (hereinafter referred to also as SSG)" is an index for the molecular weight of PTFE, and the larger the value, the smaller the molecular weight. The measurement is carried out in accordance with ASTM D1457-91a, D4895-91a.

The viscosity of the PTFE aqueous dispersion is a value measured by a Brookfield type viscometer using No. 1 spindle, at a rotational speed of 60 rpm at a temperature of 23°C.

The "ppm" as a unit for the content is by mass.

The "modified PTFE" means a TFE polymer having comonomers copolymerized to TFE to such an extent that does not cause melt-moldability.

The "non-melt-moldability" means being not melt-moldable, i.e. showing no melt flowability. Specifically, it means that the melt flow rate measured in accordance with ASTM D3307 at a measuring temperature of 372°C under a load of 49 N is less than 0.5 g/10 min.

### <PTFE particles>

In the present invention, PTFE particles are particles of a TFE polymer with non-melt-moldability and have a meaning to include both TFE homopolymer particles and modified PTFE particles.

The comonomers to be used for the production of modified PTFE may, for example, be hexafluoropropylene (HFP), a perfluoro(alkyl vinyl ether), chlorotrifluoroethylene, a (perfluoroalkyl) ethylene, vinylidene fluoride, a perfluoro (alkenyl vinyl ether), perfluoro(2,2-dimethyl-1,3-dioxole), a perfluoro(4-alkyl-1,3-dioxole), etc. One of these comonomers may be used alone, or two or more of them may be used in combination.

As the comonomers, (perfluoroalkyl)ethylenes are preferred, and particularly preferred is a (perfluoroalkyl)ethylene selected from the group consisting of (perfluoroethyl)ethylene), (perfluorobutyl)ethylene and (perfluorohexyl)ethylene.

The content of structural units based on the comonomers in the modified PTFE is preferably at most 0.5 mass%, more preferably at most 0.4 mass% to all structural units.

In the production of the modified PTFE, the total amount of TFE and comonomers to be consumed in the copolymerization reaction of TFE and comonomers is approximately equal to the amount of the modified PTFE to be produced.

The average primary particle size of the PTFE particles is from 0.1 to 0.5 µm, preferably from 0.18 to 0.45 µm, particularly preferably from 0.20 to 0.35 µm. If the average primary particle size is smaller than 0.1 µm, cracking is likely to occur in the coating layer, and if it is larger than 0.5 µm, sedimentation of PTFE particles in the PTFE aqueous dispersion tends to be too fast, such being undesirable from the viewpoint of storage stability.

The standard specific gravity (SSG) of PTFE is preferably at least 2.14 and less than 2.22, more preferably from 2.15 to 2.21. When SSG is within the above range, good mechanical properties of PTFE in the final product can be easily obtained.

The content of PTFE particles in the PTFE aqueous dispersion is from 15 to 70 mass%, preferably from 18 to 70 mass%, more preferably from 20 to 70 mass%.

If the content of PTFE particles is less than 15 mass%, the viscosity of the PTFE aqueous dispersion tends to be too low, whereby the PTFE particles are likely to sediment and the storage stability tends to be low. On the other hand, if the content of PTFE particles is larger than 70 mass%, the fluidity tends to be poor, and the handling efficiency in the next step tends to be poor. For example, in a case where the next step is an impregnation step, penetration tends to be insufficient, and in the case of a mixing step, dispersibility tends to be low.

### <Fluorinated emulsifier>

The PTFE aqueous dispersion contains a fluorinated emulsifier selected from the group consisting of C₄₋₇ fluorinated carboxylic acids which may have an etheric oxygen atom, and salts thereof. Here, the number of carbon atoms means the number of all carbon atoms per molecule.

Part or all of the fluorinated emulsifier is an emulsifier used in the step of producing PTFE by an emulsion polymerization method.

The fluorinated emulsifier is preferably a fluorinated emulsifier selected from the group consisting of C₄₋₇ fluorinated carboxylic acids having an etheric oxygen atom and salts thereof.

The fluorinated carboxylic acid having an etheric oxygen atom is a C₄₋₇ compound having an etheric oxygen atom midway in the carbon chain of the main chain and having -COOH at its terminal. The terminal -COOH may form a salt. The number of etheric oxygen atoms present midway in the main chain is at least 1, preferably from 1 to 4, more preferably 1 or 2. The number of carbon atoms is preferably from 5 to 7.

Further, the PTFE aqueous dispersion may contain at least two types of the above fluorinated emulsifiers.

Specific preferred examples of the fluorinated carboxylic acid may be C₂F₅OCF₂CF₂OCF₂COOH, C₃F₇OCF₂CF₂OCF₂COOH, CF₃OCF₂OCF₂OCF₂OCF₂COOH, CF₃O(CF₂CF₂O)₂CF₂COOH, CF₃CF₂O(CF₂)₄COOH, CF₃CFHO(CF₂)₄COOH, CF₃OCF(CF₃)CF₂OCF(CF₃)COOH, CF₃O(CF₂)₃OCF(CF₃)COOH, CF₃O(CF₂)₃OCHFCF₂COOH, C₄F₉OCF(CF₃)COOH, C₄F₉OCF₂CF₂COOH, CF₃O(CF₂)₃OCF₂COOH, CF₃O(CF₂)₃OCHFCOOH, CF₃OCF₂ OCF₂OCF₂COOH, C₄F₉OCF₂COOH, C3F₇OCF₂CF₂COOH, C₃F₇OCHFCF₂COOH, C₃F₇OCF(CF₃)COOH, CF₃CFHO(CF₂)₃COOH, CF₃OCF₂CF₂OCF₂COOH, C₂F₅OCF₂CF₂COOH, C₃F₇OCHFCOOH, CF3OCF₂CF₂COOH, CF₃(CF₂)₄COOH, C₅F₁₁COOH, and C₆F₁₃COOH.

More preferred examples may be C₂F₅OCF₂CF₂OCF₂COOH, CF₃O(CF₂)₃OCF₂COOH, CF₃OCF(CF₃)CF₂OCF(CF₃)COOH, CF₃O(CF₂)₃OCF₂CF₂COOH, CF₃O(CF₂)₃OCHFCF₂COOH, C₄F₉OCF(CF₃)COOH, and C₃F₇OCF(CF₃)COOH.

The salt of the fluorinated carboxylic acid may, for example, be a Li salt, a Na salt, a K salt, a NH₄ salt, etc.

A further preferred fluorinated emulsifier is a NH₄ salt (ammonium salt) of the above fluorinated carboxylic acid. In the case of an ammonium salt, it is excellent in solubility in an aqueous medium, and there is no possibility that a metal ion component will remain as an impurity in PTFE.

C₂F₅OCF₂CF₂OCF₂COONH₄ (hereinafter referred to as EEA) is particularly preferred.

The content of the fluorinated emulsifier in the PTFE aqueous dispersion is from 0.1 to 20,000 ppm, preferably from 0.1 to 10,000 ppm, more preferably from 0.1 to 1,000 ppm, further preferably from 0.1 to 100 ppm, particularly preferably from 0.1 to 50 ppm, most preferably from 0.1 to 10 ppm, to the mass of PTFE particles.

When the content of the fluorinated emulsifier is at most the upper limit value in the above range, the fluidity of the PTFE aqueous dispersion is good, and the handling efficiency in the next step will be good. When it is at least the lower limit value in the above range, good dispersibility of PTFE particles is obtainable. From such a viewpoint that foaming is less likely to occur, the content of the fluorinated emulsifier should preferably be small.

### <Nonionic surfactant>

In the present invention, the PTFE aqueous dispersion contains a nonionic surfactant represented by the following formula (1) (hereinafter referred to also as a nonionic surfactant (1)). The nonionic surfactant (1) contributes to the dispersion stability of the PTFE aqueous dispersion.

R¹-O-A-H (1)

In the formula (1), R¹ is a C₈-₁₈ alkyl group. The number of carbon atoms in R¹ is preferably from 10 to 16, more preferably from 12 to 16. When the number of carbon atoms in R¹ is at most 18, good dispersion stability of the PTFE aqueous dispersion tends to be easily obtained. If the number of carbon atoms in R¹ is more than 18, the flow temperature is high, whereby handling tends to be difficult. If the number of carbon atoms in R¹ is smaller than 8, the surface tension of the PTFE aqueous dispersion becomes high, whereby the permeability or wettability tends to decrease.

A is a polyoxyalkylene chain composed of an average repeating number of from 5 to 20 oxyethylene groups and an average repeating number of from 0 to 2 oxypropylene groups, and is a hydrophilic group. When the average repeating number of oxypropylene groups is more than 0, oxyethylene groups and oxypropylene groups in A may be arranged in a block form or in a random form.

From the viewpoint of the viscosity and stability of the PTFE aqueous dispersion, a polyoxyalkylene chain composed of an average repeating number of from 7 to 12 oxyethylene groups and an average repeating number of from 0 to 2 oxypropylene groups is preferred. Particularly, A having from 0.5 to 1.5 oxypropylene groups is preferred, since the low foaming characteristic is thereby good.

Specific examples of the nonionic surfactant (1) may be C₁₃H₂₇-O-(C₂H₄O)₁₀-H, C₁₂H₂₅-O-(C₂H₄O)₁₀-H, C₁₀H₂₁CH(CH₃)CH₂-O-(C₂H₄O)₉-H, C₁₃H₂₇-O-(C₂H₄O)₉-(CH(CH₃)CH₂O)-H, C₁₆H₃₃-O-(C₂H₄O)₁₀-H, HC(C₅H₁₁)(C₇H₁₅)-O-(C₂H₄O)₉-H, etc.

Commercially available products may, for example, be TERGITOL (registered trademark) 15S series manufactured by Dow Chemical Company, LIONOL (registered trademark) TD series manufactured by Lion Corporation, etc.

The content of the nonionic surfactant in the PTFE aqueous dispersion (1) is from 1 to 20 parts by mass, preferably from 1 to 10 parts by mass, more preferably from 2 to 8 parts by mass, further preferably from 3 to 8 parts by mass, particularly preferably from 5 to 6 parts by mass, per 100 parts by mass of the PTFE particles.

When the content of the nonionic surfactant (1) is at least the lower limit value in the above range, excellent dispersion stability of the PTFE aqueous dispersion is obtainable. Further, good wettability tends to be easily obtained. When it is at most the upper limit value, defects tend to hardly occur in the coating layer. Further, in the final product, good durability tends to be easily obtained.

### <Compound represented by the formula (2)>

The PTFE aqueous dispersion contains a compound represented by the following formula (2) (hereinafter referred to also as a compound (2)). The PTFE aqueous dispersion containing such a compound is hardly susceptible to foaming.

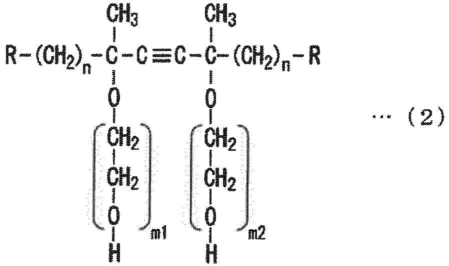

In the formula (2), R is a C₂₋₄ alkyl group, n is 1 or 2, and each of m₁ and m₂ represents an average repeating number of oxyethylene groups, provided that the total of m₁ and m₂ is from 1 to 6. The total of m₁ and m₂ is preferably from 1 to 5, more preferably from 1 to 4.

R may be linear or branched and is preferably a C₃₋₄ alkyl group, and the number of carbon atoms being 3 is more preferred. Especially, -CH(CH₃)₂ is particularly preferred. A compound of the formula (3) (hereinafter referred to also as a compound (3)) is most preferred.

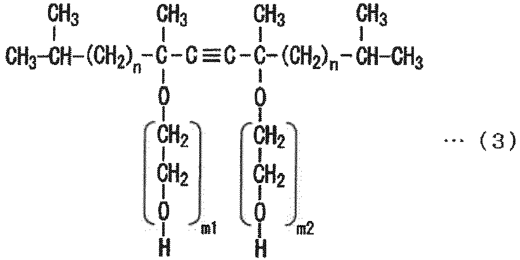

In the formula (3), n, m₁, m₂, and the total of m₁ and m₂, are the same as n, m₁, m₂, and the total of m₁ and m₂ in the formula (2), respectively.

As the compound (2) or the compound (3), one type may be used alone, or two or more types may be used in combination. In the case of the combination, the total of m₁ and m₂ indicates an average value and therefore may not be an integer. From such a viewpoint that the PTFE aqueous dispersion will be excellent in the low foaming characteristic, a compound (3) is preferred.

As specific preferred examples, in formula (3), a compound wherein n=2, and m₁+m₂=3, a compound wherein n=2, and m₁+m₂=4, a compound wherein n=2, and m₁+m₂=5, a compound wherein n=1, and m₁+m₂=1, a compound wherein n=1, and m₁+m₂=1.3, a compound wherein n=1, and m₁+m₂=2, a compound wherein n=1, and m₁+m₂=3, a compound wherein n=1, and m₁+m₂=3.5, a compound wherein n=1, and m₁+m₂=4, etc. may be mentioned. Among them, a compound (3) wherein n=2, and m₁+m₂=4, is preferred from such a viewpoint that the PTFE aqueous dispersion will thereby have a long stability retention time by the mechanical stability test.

As the compound (2) and the compound (3) in the present invention, it is possible to use commercially available products. Commercially available products may, for example, be Dynol 604 (tradename, manufactured by Air Products and Chemicals, Inc.), Surfynol 440 (tradename, manufactured by Air Products and Chemicals, Inc.), Surfynol 420 (tradename, manufactured by Air Products and Chemicals, Inc.), etc.

The content of the compound (2) in the PTFE aqueous dispersion is from 0.01 to 3.0 parts by mass, preferably from 0.05 to 2.0 parts by mass, more preferably from 0.05 to 1.5 parts by mass, further preferably from 0.08 to 1.0 part by mass, particularly preferably from 0.08 to 0.6 parts by mass, per 100 parts by mass of PTFE particles.

If the content of the compound (2) is less than 0.01 part by mass, the effect to improve the low foaming characteristic tends to be insufficient, and if it exceeds 3.0, the compound will not be completely dissolved in the aqueous PTFE dispersion, whereby a residue will remain to cause a problem. For example, when coated with the PTFE aqueous dispersion, the uniformity of the coating layer is likely to be impaired.

### <Other surfactants>

The PTFE aqueous dispersion may contain other surfactants which do not belong to any of the above described fluorinated emulsifier, nonionic surfactant (1) and compound (2), within a range not to impair the effects of the present invention.

When containing other surfactants, their content is preferably at most 3 parts by mass, more preferably at most 2 parts by mass, further preferably at most 1 part by mass, per 100 parts by mass of PTFE particles.

### <Water and other components>

The PTFE aqueous dispersion contains water as part or all of the dispersion medium.

Further, it may contain components (hereinafter referred to as other components) which do not belong to any of the above-described PTFE particles, fluorinated emulsifier, nonionic surfactant (1), compound (2), other surfactants and water, within a range not to impair the effects of the present invention.

Other components may, for example, be components used in the emulsion polymerization step for PTFE particles. Further, they may be known additives such as polyethylene oxide or polyurethane type viscosity modifiers, leveling agents, preservatives, coloring agents, fillers, organic solvents, aqueous ammonia, etc.

As a polyethylene oxide, the mass-average molecular weight is preferably from 100,000 to 1,500,000, more preferably from 200,000 to 1,000,000.

As a viscosity modifier of polyurethane type, SN Thickener 621N (tradename, manufactured by San Nopco Limited), Adeka Nol UH140S (tradename, manufactured by Adeka Corporation), etc. may be mentioned, and Adeka Nol UH140S (tradename, manufactured by Adeka Corporation) is preferred.

The total amount of other components is preferably at most 5 parts by mass, more preferably at most 4 parts by mass, further preferably at most 3 parts by mass, per 100 parts by mass of PTFE particles.

### <Viscosity>

The viscosity at 23°C of the PTFE aqueous dispersion is preferably from 3 to 300 mPa·s, more preferably from 3 to 100 mPa·s, further preferably from 5 to 50 mPa·s. When the viscosity is at least the lower limit value in the above range, the coating layer will not be too thin when coated, and when it is at most the upper limit value, it is easy to adjust the thickness of the coating layer when coated.

### <Production method>

The PTFE aqueous dispersion of the present invention can be produced by obtaining a PTFE aqueous emulsion by a process of emulsion polymerization using the above fluorinated emulsifier in an aqueous medium, adding the nonionic surfactant (1) to the aqueous PTFE emulsion for stabilization, and, after concentrating it or without concentrating it, blending the compound (2).

### [Production of PTFE aqueous emulsion]

The PTFE aqueous emulsion can be produced by a method of subjecting TFE to a polymerization reaction or subjecting TFE and at least one type of comonomer, in the presence of an aqueous medium, a polymerization initiator, the above fluorinated emulsifier and a stabilizing aid.

In the case of using comonomer(s), it is preferred that the total amount is charged into the polymerization reactor before initiation of the polymerization reaction, from such a viewpoint that the particle size of the resulting PTFE thereby tends to become uniform.

With respect to the polymerization conditions, the polymerization temperature is preferably from 10 to 95°C, and the polymerization pressure is preferably from 0.5 to 4.0 MPa. The polymerization time is preferably from 1 to 20 hours.

The amount of the fluorinated emulsifier to be used in the polymerization step is preferably from 1,500 to 20,000 ppm, more preferably from 2,000 to 20,000 ppm, further preferably from 2,000 to 15,000 ppm, to the final yield of PTFE particles.

The stabilizing aid is preferably paraffin wax, fluorinated oil, a fluorinated solvent, silicone oil, etc. As the stabilizing aid, one type may be used alone, or two or more types may be used in combination. As the stabilizing aid, paraffin wax is more preferred.

The amount of the stabilizing aid to be used, is preferably from 0.1 to 12 mass%, more preferably from 0.1 to 8 mass%, to the aqueous medium to be used.

As the polymerization initiator, a water-soluble radical initiator or a water-soluble redox catalyst is, for example, preferred. As the water-soluble radical initiator, a persulfate such as ammonium or potassium persulfate, or a water-soluble organic peroxide such as disuccinic acid peroxide, bisglutaric acid peroxide or tert-butyl hydroperoxide, is preferred.

As the polymerization initiator, one type may be used alone, or two or more types may be used in combination. As the initiator, a mixed system of disuccinic acid peroxide and a persulfate is more preferred.

The amount of the polymerization initiator to be used is preferably from 0.01 to 0.20 mass%, more preferably from 0.01 to 0.15 mass%, to the final yield of PTFE particles.

In the polymerization process, it is possible to control the molecular weight of PTFE to be produced by letting a chain transfer agent be present in the polymerization system.

The chain transfer agent is preferably a chain transfer agent selected from the group consisting of methanol, ethanol, methane, ethane, propane, hydrogen and a halogenated hydrocarbon, and methanol is more preferred. As the chain transfer agent, two or more types may be used in combination, and in such a case, it is preferred to use methanol as a part thereof.

In the case of using a chain transfer agent, it is preferred to add the chain transfer agent to the polymerization system during the period after the initiation of the polymerization reaction until completion of the addition of the total amount of TFE to be used in the polymerization. The addition of the chain transfer agent may be either batch addition, continuous addition or intermittent addition.

In particular, the chain transfer agent is more preferably added at the time when the amount of TFE added reached from 10 to 95% by mass of the total amount of TFE to be used.

The total amount of the chain transfer agent to be used, is preferably from 0.002 to 0.3 mass%, more preferably from 0.005 to 0.3 mass%, particularly preferably from 0.006 to 0.25 mass%, to the final yield of PTFE particles.

As the aqueous medium, water or a mixed liquid of a water-soluble organic solvent and water, is used. The water may be ion exchanged water, pure water, ultrapure water, etc. The water-soluble organic solvent may be an alcohol (except methanol and ethanol), a ketone, an ether, an ethylene glycol, a propylene glycol, etc. In the polymerization of TFE, as the aqueous medium, water is preferred.

The content of PTFE particles in the PTFE aqueous emulsion is preferably from 15 to 40 mass%, more preferably from 17 to 35 mass%, particularly preferably from 20 to 30 mass%.

### [PTFE aqueous emulsion, concentration of dispersion]

To the PTFE aqueous emulsion obtained by the emulsion polymerization, a nonionic surfactant (1) and a compound (2) are blended to obtain a low concentration PTFE aqueous dispersion.

By adding a nonionic surfactant (1) to the aqueous PTFE emulsion, followed by concentration by a known method, to obtain a concentrate, and then adding a compound (2) to the concentrate, it is possible to obtain a high concentration aqueous PTFE dispersion. The content of PTFE particles in the high concentration PTFE aqueous dispersion, is preferably from 40 to 70 mass%, more preferably from 50 to 70 mass%.

As the concentration method, it is possible to use a known method such as a centrifugal sedimentation method, an electrophoresis method or a phase separation method, as disclosed, for example, on page 32 of Fluororesin Handbook (edited by Satokawa Takaomi, published by Nikkan Kogyo Shimbun, Ltd.).

In the concentration step, certain amounts of the fluorinated emulsifier and the nonionic surfactant (1) will be removed together with the supernatant.

Further, prior to the concentration step, the fluorinated emulsifier may be reduced by a known method. For example, it is possible to use a method of letting it be adsorbed on an anion exchange resin.

The nonionic surfactant (1) is preferably additionally added, after the step of concentrating the aqueous PTFE dispersion, to adjust it to a predetermined content.

### <Applications>

The PTFE aqueous dispersion of the present invention is useful for e.g. the following applications.

Coating process of various fluororesins, preparation of fluororesin films, fluororesin fibers, etc.

In the coating process, the PTFE aqueous dispersion composition is applied to an object to be coated, to obtain a coated article having a PTFE coating layer on the surface. The object to be coated (also referred to as the substrate) is not particularly limited, and, for example, various metals, enamel, glass, various ceramics, or various heat-resistant resin molded articles, may be mentioned.

The above coating is usually carried out by applying the PTFE aqueous dispersion composition of the present invention to a substrate, followed by drying and then sintering. The PTFE aqueous dispersion composition may be applied directly on the substrate, or by providing a primer layer in order to improve the adhesion to the substrate, it may be formed as a top coat layer thereon.

Usually, it is used as a resin molded product in contact directly with an object to be coated, or as a resin molded product in contact with an object to be coated via e.g. a primer layer.

The resin molded product may, for example, be a metal cookware, a bearing, a valve, an electric wire, a metal foil, a boiler, a pipe, a ship hull, an oven lining, an iron base plate, an ice making tray, a snow shovel, a plow, a chute, a conveyor, a roll, a die, a dice, a saw, a rasp, a tool such as a drill, a knife, scissors, a hopper, other industrial containers (especially for the semiconductor industry), a mold, etc.

Depending on the type of the substrate, after the sintering, it is also possible to obtain a PTFE film by peeling it from the substrate. Such a PTFE film is useful as a coating material for a high-frequency printed circuit board, a transfer belt, a packing, etc.

In a case where a porous substrate such as a fibrous substrate, a woven fabric, a nonwoven fabric or the like, is used as the substrate, it is possible to obtain a product having PTFE impregnated into the substrate.

The fibrous substrate may, for example, be glass fibers, carbon fibers, or aramid fibers (Kevlar fibers, etc.). The woven or nonwoven fabric may, for example, be a roofing material (tent film) for a film structure building. In a case where optical transparency is required for such a roofing material, it is preferred to use a modified PTFE as PTFE.

### EXAMPLES

The present invention will be described in more detail with reference to Examples, but the present invention is not limited to these Examples.

The following measuring methods and evaluation methods were used.

### <Average primary particle size of PTFE>

Measured by using a laser scattering method particle size distribution analyzer (LA-920 (product name) manufactured by Horiba, Ltd.)

### <Standard specific gravity (SSG) of PTFE>

Measured in accordance with ASTM D1457-91 a, D4895-91a.

### <pH of PTFE aqueous dispersion>

The pH at 23°C was measured by the glass electrode method.

### <Viscosity of aqueous PTFE dispersion>

The viscosity at 23°C was measured by a Brookfield viscometer, using No.1 spindle, at a rotational speed of 60 rpm.

### <Content of PTFE particles>

10 g of the PTFE aqueous dispersion was put in an aluminum dish with a known mass and heated at 380°C for 35 minutes, to remove a surfactant, etc. by pyrolysis. The mass of the solid content (PTFE) remaining in the aluminum dish after the heating, was adopted as the content of PTFE particles in 10 g of the PTFE aqueous dispersion.

### <Content of fluorinated emulsifier>

Using LCMS (high performance liquid chromatography provided with mass spectrometer), a calibration curve was prepared from peak areas obtained by using fluorinated emulsifiers having previously known concentrations. Then, a predetermined amount of the PTFE aqueous dispersion as a sample, was dried at 70°C for 16 hours, then, the fluorinated emulsifier was extracted with ethanol, the peak area by LCMS was measured, and the content of the fluorinated emulsifier in the sample was obtained by using the calibration curve.

### <Content of nonionic surfactant (1)>

10 g of the PTFE aqueous dispersion was put in an aluminum dish with a known mass and dried at 120°C for one hour, whereupon the mass was measured. By subtracting the content of PTFE particles measured by the above method from the mass of the solid content (the nonionic surfactant (1) and PTFE particles) remaining in the aluminum dish after the heating, the content of the nonionic surfactant (1) was obtained.

### <Mechanical stability test>

100 g of the PTFE aqueous dispersion was put in a plastic cup having a diameter 65 mm and an inner volume of 400 ml, and immersed in a water bath at 60°C, wherein a stirring blade (Fig. 1) with a diameter of 55 mm was set so that the height from the bottom of the plastic cup to the center of the stirring blade (the position at 7 mm from the lower end of the stirring blade in the axial direction in Fig. 1(b)) became to be 20 mm, and rotated at 3,000 rpm, whereby the time until the PTFE aqueous dispersion was aggregated, or solidified and scattered, was measured as the stability retention time. The stability retention time being at least 30 minutes, was judged to be "good".

### <Low foaming characteristic test>

In the above mechanical stability test, by observing the foaming state during the stirring, the maximum value in height of the foam from the liquid surface was recorded as the maximum foam height. Further, the time from the initiation of the mechanical stability test until the foam disappeared was measured and adopted as the defoaming time. The low foaming characteristic was evaluated by the following standards.
A: No foaming.
B: The defoaming time is at most 4 minutes.
C: The defoaming time exceeds 4 minutes.

In the following description, the following names represent the following components.
Comonomer (1): (perfluorobutyl) ethylene.
Fluorinated emulsifier (1): EEA.
Chain transfer agent (1): methanol.
Nonionic surfactant (1): TERGITOL TMN100X (an aqueous solution with an active component concentration of 90 mass%, (product name, manufactured by Dow Chemical Company)).
Compound (A1): Dynol 604 (in the formula (3), n=2, m₁+m₂=4, (product name, manufactured by Air Products and Chemicals, Inc.)).
Compound (A2): Surfynol 440 (in the formula (3), n=1, m₁+m₂=3.5, (product name, manufactured by Air Products and Chemicals, Inc.)).
Compound (A3): Surfynol 420 (in the formula (3), n=1, m₁+m₂=1.3, (product name, manufactured by Air Products and Chemicals, Inc.)).
Compound (B): Surfynol 104A (50 mass% solution of the compound of the formula (3), n=1, m₁+m₂=0 in 2-ethylhexyl alcohol (product name, manufactured by Air Products and Chemicals, Inc.)).
Compound (C): Silwet L-77 (polyether-modified silicone surfactant (product name, manufactured by Momentive Performance Materials Inc.)).
Compound (D): Xylene (manufactured by Wako Pure Chemical Industries, Ltd.).
Compound (E): Surfynol DF75 (non-silicone, non-acetylenic surfactant (product name, manufactured by Air Products and Chemicals, Inc.)).

### (Production Example 1: Production of PTFE aqueous emulsion)

Into a 100 L stainless steel autoclave equipped with baffles and a stirrer, 75 g of the fluorinated emulsifier (1), 924 g of paraffin wax and 59 L of deionized water were charged. After the autoclave was purged with nitrogen and brought to a reduced pressure, 3.5 g of the comonomer (1) was charged. Further, while pressurizing with TFE and stirring, the temperature was raised to 79°C. Then, the pressure was raised to 1.42 MPa with TFE, and 0.2 g of ammonium persulfate and 26.3 g of disuccinic acid peroxide (concentration 80 mass%, remainder being water) were dissolved in 1 L of hot water of about 70°C and injected to initiate a polymerization reaction. The internal pressure dropped to 1.40 MPa in about 6 minutes. While adding TFE so that the internal pressure of the autoclave was maintained to be 1.42 MPa, the polymerization was continued. At the time when the amount of TFE added after initiation of the polymerization became 3.91 kg, 158 g of the fluorinated emulsifier (1) was added. Further, at the time when the amount of TFE added after initiation of the polymerization became 20.80 kg, 13.9 g of the chain transfer agent (1) was added. Then, at the time when the amount of TFE added after initiation of the polymerization became 23.11 kg, the reaction was terminated. During this period, the polymerization temperature was raised to 85°C. The polymerization time was 140 minutes.

The obtained PTFE aqueous emulsion was cooled, and the supernatant paraffin wax was removed, whereupon the PTFE aqueous emulsion was taken out. A coagulum remaining in the reactor was just about a trace. The content of PTFE particles in the obtained PTFE aqueous emulsion was 26.5 mass%.

In this Example, based on the mass of PTFE particles, the proportion of the total amount (233 g) of the fluorinated emulsifier (1) used, is 10,000 ppm.

The average primary particle size of PTFE fine particles in the obtained PTFE aqueous emulsion was 0.21 µm, and SSG of PTFE was 2.179.

### (Example 1: Preparation of PTFE aqueous dispersion)

To the aqueous PTFE emulsion obtained in Production Example 1, the nonionic surfactant (1) was dissolved so that the active component would be 3 parts by mass to 100 parts by mass of PTFE particles, to obtain a stable aqueous dispersion. Then, into a 5L beaker, 5 kg of the aqueous dispersion and 200 g of a strongly basic ion exchange resin (manufactured by Purolite, PUROLITE (registered trademark) A300) were put and stirred at room temperature for 12 hours.

Further, the aqueous dispersion was filtered by a nylon mesh with a mesh size of 100 and then concentrated by electrophoresis, whereupon the supernatant was removed, to obtain a concentrate wherein the content of PTFE particles was 66 mass%, and the content of the nonionic surfactant (1) was 2.2 parts by mass per 100 parts by mass of PTFE particles.

To this concentrate, the nonionic surfactant (1) was added so that the amount of the active component would be 2.3 parts by mass per 100 parts by mass of PTFE particles, the compound (A) was added in an amount of 0.25 parts by mass per 100 parts by mass of the PTFE particles, and at the same time, water and ammonia in an amount to become a concentration of 500 ppm, were added to obtain the desired PTFE aqueous dispersion.

The content (unit: mass%) of PTFE particles in the obtained PTFE aqueous dispersion, the content (unit: ppm) of the fluorinated emulsifier (1) to the mass of PTFE particles, and the contents (unit: parts by mass) of the nonionic surfactant (1) and the compound (A) per 100 parts by mass of PTFE particles, are shown in Tables 1 and 2 (hereinafter, the same applies).

The viscosity (unit: mPa·s) and pH of the PTFE aqueous dispersion were measured by the above-mentioned methods. Further, the mechanical stability test and the low foaming characteristic test were carried out by the methods as described above. These results are shown in Tables 1 and 2 (hereinafter the same applies).

### (Examples 2 to 8, Comparative Examples 1 to 5: Preparation of PTFE aqueous dispersions)

In Example 1, the compounds added to the concentrate were changed as shown in Tables 1 and 2. Otherwise, in the same manner as in Example 1, the PTFE aqueous dispersion (PTFE high concentration aqueous dispersion) was obtained and evaluated in the same manner.

**[Table 1]**

| | | | [Unit] | Ex. 1 | Ex. 2 | Ex. 3 | Ex. 4 | Ex. 5 | Ex. 6 | Ex. 7 | Ex. 8 |
|---|---|---|---|---|---|---|---|---|---|---|---|
| PTFE aqueous dispersion | Contents of main components | PTFE particles | [mass%] | 60.5 | 60.5 | 60.5 | 60.5 | 60.5 | 60.5 | 60.5 | 60.5 |
| | | Fluorinated emulsifier (1) | [ppm/PTFE particles] | 2 | 2 | 2 | 2 | 2 | 2 | 2 | 2 |
| | | Nonionic surfactant (1) | [parts by mass/100 parts by mass of PTFE articles] | 4.5 | 4.5 | 4.5 | 4.5 | 4.5 | 4.5 | 4.5 | 4.5 |
| | | Compound (A1) | [parts by mass/100 parts by mass of PTFE particles] | 0.25 | - | 0.5 | - | 1.0 | - | 1.5 | 0.1 |
| | | Compound (A2) | | - | - | - | 1.0 | - | - | - | - |
| | | Compound (A3) | | - | 0.25 | - | - | - | 1.0 | - | - |
| | | Compound (B) | | - | - | - | - | - | - | - | - |
| | | Compound (C) | | - | - | - | - | - | - | - | - |
| | | Compound (D) | | - | - | - | - | - | - | - | - |
| | | Compound (E) | | - | - | - | - | - | - | - | - |
| States | Dissolved state of compounds | | - | No undissolved residue | | | | | | | |
| | Viscosity (23°C) | | [mPa·s] | 19.3 | 18.7 | 18.6 | 18.4 | 17.1 | 29.1 | 21.5 | 18.9 |
| | pH (23°C) | | - | 9.70 | 9.56 | 9.61 | 9.48 | 9.60 | 9.46 | 9.46 | 9.60 |
| Evaluation results | Mechanical stability test | Stability retention time | [min] | 35.9 | 32.9 | 39.5 | 31.8 | 33.9 | 31.0 | 31.2 | 40.0 |
| | | Evaluation results | - | Good | Good | Good | Good | Good | Good | Good | Good |
| | Defoaming test | Maximum foaming height | [mm] | No foaming | | | | | | | |
| | | Defoaming time | [min] | 0 | 0 | 0 | 0 | 0 | 0 | 0 | . 0 |
| | | Evaluation results | - | A | A | A | A | A | A | A | A |

**[Table 2]**

| | | | [Unit] | Comp. Ex.1 | Comp. Ex.2 | Comp. Ex.3 | Comp. Ex.4 | Comp. Ex.5 |
|---|---|---|---|---|---|---|---|---|
| PTFE aqueous dispersion | Contents of main components | PTFE particles | [mass%] | 60.5 | 60.5 | 60.5 | 60.5 | 60.5 |
| | | Fluorinated emulsifier (1) | [ppm/PTFE particles] | 2 | 2 | 2 | 2 | 2 |
| | | Nonionic surfactant (1) | [parts by mass/100 parts by mass of PTFE particles] | 4.5 | 4.5 | 4.5 | 4.5 | 4.5 |
| | | Compound (A1) | [parts by mass/100 parts by mass of PTFE particles] | - | - | - | - | - |
| | | Compound (A2) | | - | - | - | - | - |
| | | Compound (A3) | | - | - | - | - | - |
| | | Compound (B) | | - | - | - | - | 1.1 |
| | | Compound (C) | | - | 0.5 | - | - | - |
| | | Compound (D) | | - | - | 0.25 | - | - |
| | | Compound (E) | | - | - | - | 0.25 | - |
| States | Dissolved state of compounds | | - | No undissolved residue | No undissolved residue | No oily floating substance | Oily floating substance | Coagulation occurred |
| | Viscosity (23°C) | | [mPa·s] | 19.2 | 18.3 | 19.4 | - | - |
| | pH | | - | 9.66 | 9.47 | 9.59 | - | - |
| Evaluation results | Mechanical stability test | Stability retention time | [min] | 39.8 | 37.7 | 45.4 | - | - |
| | | Evaluation results | - | Good | Good | Good | - | - |
| | Defoaming test | Maximum foaming height | [mm] | 75 | 78 | No foaming | - | - |
| | | Defoaming time | [min] | 3.8 | 4.3 | 0 | - | - |
| | | Evaluation results | - | B | C | A | - | - |

As shown in the evaluation results in Tables 1 and 2, in the aqueous PTFE dispersion in each of Examples 1 to 8 wherein compound (A1), (A2) or (A3) was added as the compound (2), no foaming was observed, thus indicating that the dispersion was excellent in low foaming characteristic and less susceptible to foaming. Further, no undissolved residue of the compound (A1), (A2) or (A3) was observed, and the dissolved state was good.

On the other hand, in Comparative Example 1 wherein the compound (2) was not added, foaming was observed, and the foamed state continued for a long time.

Compounds (B), (C) and (E) used in Comparative Examples 2, 4 and 5 are surfactants which are used as surface modifiers in the fields of paints and coatings.

In Comparative Example 2, the compound (C) was contained whereby foaming was observed in the same manner as in Comparative Example 1 wherein no compound (2) was contained, and it took a longer time for defoaming.

In Comparative Example 3, a low foaming effect of the compound (D) was confirmed, but the PTFE aqueous dispersion containing xylene as a low flash point material is not desirable for industrial use.

In Comparative Example 4, the compound (E) was not dissolved in the concentrate and was in a state floating on the surface, such being not preferred as a product, and therefore, no further evaluation was carried out.

In Comparative Example 5, by the addition of the compound (B) to the concentrate, the coagulation of PTFE occurred, and therefore, no further evaluation was carried out.

## Claims

1. A polytetrafluoroethylene aqueous dispersion **characterized by** comprising
from 15 to 70 mass% of polytetrafluoroethylene particles having an average primary particle size of from 0.1 to 0.5 µm,
from 0.1 to 20,000 ppm, to the mass of the above polytetrafluoroethylene particles, of a fluorinated emulsifier selected from the group consisting of C₄₋₇ fluorinated carboxylic acids which may have an etheric oxygen atom, and salts thereof,
from 1 to 20 parts by mass, per 100 parts by mass of the above polytetrafluoroethylene particles, of a nonionic surfactant represented by the following formula (1),
from 0.01 to 3.0 parts by mass, per 100 parts by mass of the above polytetrafluoroethylene particles, of a compound represented by the following formula (2), and water,
R¹-O-A-H (1)
wherein R¹ is a C₈₋₁₈ alkyl group, and A is a polyoxyalkylene chain composed of an average repeating number of from 5 to 20 oxyethylene groups and an average repeating number of from 0 to 2 oxypropylene groups, 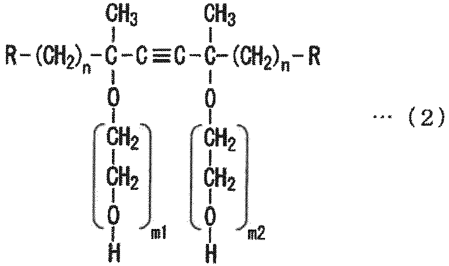 wherein R is a C₂₋₄ alkyl group, n is 1 or 2, and m₁ and m₂ are each independently an average repeating number of oxyethylene groups, provided that the total of m₁ and m₂ is from 1 to 6.

2. The polytetrafluoroethylene aqueous dispersion according to Claim 1, which has a viscosity of from 3 to 300 mPa-s at 23°C.

3. The polytetrafluoroethylene aqueous dispersion according to Claim 1 or 2, wherein in the formula (2), R is -CH(CH₃)₂.

4. The polytetrafluoroethylene aqueous dispersion according to any one of Claims 1 to 3, wherein the fluorinated emulsifier is a fluorinated emulsifier selected from the group consisting of C₄₋₇ fluorinated carboxylic acids having from 1 to 4 etheric oxygen atoms, and salts thereof.

5. The polytetrafluoroethylene aqueous dispersion according to any one of Claims 1 to 4, wherein in the formula (1), the number of carbon atoms in R¹ is from 10 to 16, and A is a polyoxyalkylene chain composed of an average repeating number of from 7 to 12 oxyethylene groups and an average repeating number of from 0 to 2 oxypropylene groups.

6. The polytetrafluoroethylene aqueous dispersion according to any one of Claims 1 to 5, wherein the nonionic surfactant represented by the formula (1) is contained in an amount of from 2 to 8 parts by mass per 100 parts by mass of the above polytetrafluoroethylene particles.

7. The polytetrafluoroethylene aqueous dispersion according to any one of Claims 1 to 6, wherein in the formula (2), the total of m₁ and m₂ is from 1 to 5.

8. The polytetrafluoroethylene aqueous dispersion according to any one of Claims 1 to 7, wherein in the formula (2), the total of m₁ and m₂ is from 1 to 4.

9. The polytetrafluoroethylene aqueous dispersion according to any one of Claims 1 to 8, wherein the compound represented by the formula (2) is contained in an amount of from 0.05 to 2.0 parts by mass per 100 parts by mass of the above polytetrafluoroethylene particles.

10. The polytetrafluoroethylene aqueous dispersion according to any one of Claims 1 to 9, wherein in the formula (2), n is 2, and the total of m₁ and m₂ is 4.

11. The polytetrafluoroethylene aqueous dispersion according to any one of Claims 1 to 10, wherein the above polytetrafluoroethylene particles are particles of a non-melt-moldable polytetrafluoroethylene.

12. The polytetrafluoroethylene aqueous dispersion according to Claim 11, wherein the above polytetrafluoroethylene particles are particles of a modified polytetrafluoroethylene wherein the content of structural units based on comonomers to all structural units is at most 0.5 mass%.

## Patentansprüche

1. Wässrige Polytetrafluorethylendispersion, **dadurch gekennzeichnet, dass** sie von 15 bis 70 Massen-% Polytetrafluorethylenteilchen mit einer gemittelten Primärteilchengröße von 0,1 bis 0,5 µm,
von 0,1 bis 20000 ppm, bezogen auf die Masse der vorstehenden Polytetrafluorethylenteilchen, eines fluorierten Emulsionsmittels, ausgewählt aus der Gruppe, bestehend aus fluorierten C₄₋₇-Carbonsäuren, welche ein etherisches Sauerstoffatom aufweisen können, sowie Salzen davon,
von 1 bis 20 Massenteile, pro 100 Massenteile der vorstehenden Polytetrafluorethylenteilchen, eines nicht-ionischen grenzflächenaktiven Mittels, dargestellt durch die folgende Formel (1),
von 0,01 bis 3,0 Massenteile, pro 100 Massenteile der vorstehenden Polytetrafluorethylenteilchen, einer Verbindung, dargestellt durch die folgende Formel (2), und Wasser umfasst,
R¹-O-A-H (1)
wobei R¹ eine C₈₋₁₈-Alkylgruppe ist und A eine Polyoxyalkylenkette, gebildet aus einer gemittelten Wiederholungszahl von 5 bis 20 Oxyethylengruppen und einer gemittelten Wiederholungszahl von 0 bis 2 Oxypropylengruppen, ist, 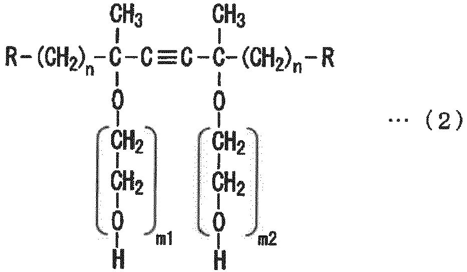 wobei R eine C₂₋₄-Alkylgruppe ist, n 1 oder 2 ist und m₁ und m₂ jeweils unabhängig eine gemittelte Wiederholungszahl von Oxyethylengruppen sind, mit der Maßgabe, dass die Gesamtzahl von m₁ und m₂ von 1 bis 6 beträgt.

2. Wässrige Polytetrafluorethylendispersion nach Anspruch 1, welche eine Viskosität von 3 bis 300 mPa-s bei 23°C aufweist.

3. Wässrige Polytetrafluorethylendispersion nach Anspruch 1 oder 2, wobei in der Formel (2) R -CH(CH₃)₂ ist.

4. Wässrige Polytetrafluorethylendispersion nach einem der Ansprüche 1 bis 3, wobei das fluorierte Emulsionsmittel ein fluoriertes Emulsionsmittel, ausgewählt aus der Gruppe, bestehend aus fluorierten C₄₋₇-Carbonsäuren mit 1 bis 4 etherischen Sauerstoffatomen sowie Salzen davon, ist.

5. Wässrige Polytetrafluorethylendispersion nach einem der Ansprüche 1 bis 4, wobei in der Formel (1) die Anzahl von Kohlenstoffatomen in R¹ von 10 bis 16 beträgt und A eine Polyoxyalkylenkette, gebildet aus einer gemittelten Wiederholungszahl von 7 bis 12 Oxyethylengruppen und einer gemittelten Wiederholungszahl von 0 bis 2 Oxypropylengruppen, ist.

6. Wässrige Polytetrafluorethylendispersion nach einem der Ansprüche 1 bis 5, wobei das nicht-ionische grenzflächenaktive Mittel, dargestellt durch die Formel (1), in einer Menge von 2 bis 8 Massenteilen pro 100 Massenteile der vorstehenden Polytetrafluorethylenteilchen enthalten ist.

7. Wässrige Polytetrafluorethylendispersion nach einem der Ansprüche 1 bis 6, wobei in der Formel (2) die Gesamtzahl von m₁ und m₂ von 1 bis 5 beträgt.

8. Wässrige Polytetrafluorethylendispersion nach einem der Ansprüche 1 bis 7, wobei in der Formel (2) die Gesamtzahl von m₁ und m₂ von 1 bis 4 beträgt.

9. Wässrige Polytetrafluorethylendispersion nach einem der Ansprüche 1 bis 8, wobei die Verbindung, dargestellt durch die Formel (2), in einer Menge von 0,05 bis 2,0 Massenteilen pro 100 Massenteile der vorstehenden Polytetrafluorethylenteilchen enthalten ist.

10. Wässrige Polytetrafluorethylendispersion nach einem der Ansprüche 1 bis 9, wobei in der Formel (2) n 2 ist und die Gesamtzahl von m₁ und m₂ 4 beträgt.

11. Wässrige Polytetrafluorethylendispersion nach einem der Ansprüche 1 bis 10, wobei die vorstehenden Polytetrafluorethylenteilchen Teilchen aus einem nichtschmelzformbaren Polytetrafluorethylen sind.

12. Wässrige Polytetrafluorethylendispersion nach Anspruch 11, wobei die vorstehenden Polytetrafluorethylenteilchen Teilchen aus einem modifizierten Polytetrafluorethylen sind, wobei der Gehalt von Struktureinheiten in Bezug auf Comonomere zu allen Struktureinheiten höchstens 0,5 Massen-% beträgt.

## Revendications

1. Dispersion aqueuse de polytétrafluoroéthylène, **caractérisée par** le fait de comprendre
de 15 à 70 % en masse de particules de polytétrafluoroéthylène ayant une taille particulaire primaire moyenne de 0,1 à 0,5 µm,
de 0,1 à 20 000 ppm, sur la masse des particules de polytétrafluoroéthylène ci-dessus, d'un émulsifiant fluoré sélectionné parmi le groupe constitué d'acides carboxyliques fluorés en C₄₋₇ qui peuvent avoir un atome d'oxygène éthérique, et des sels de ceux-ci,
de 1 à 20 parties en masse, pour 100 parties en masse des particules de polytétrafluoroéthylène ci-dessus, d'un tensioactif non ionique représenté par la formule (1) suivante,
de 0,01 à 3,0 parties en masse, pour 100 parties en masse des particules de polytétrafluoroéthylène ci-dessus, d'un composé représenté par la formule (2) suivante, et de l'eau,
R¹-O-A-H (1)
dans laquelle R¹ est un groupe alkyle en C₈₋₁₈ et A est une chaîne de polyoxyalkylène composée d'un nombre de répétitions moyen de 5 à 20 groupes oxyéthylène et un nombre de répétitions moyen de 0 à 2 groupes oxypropylène, 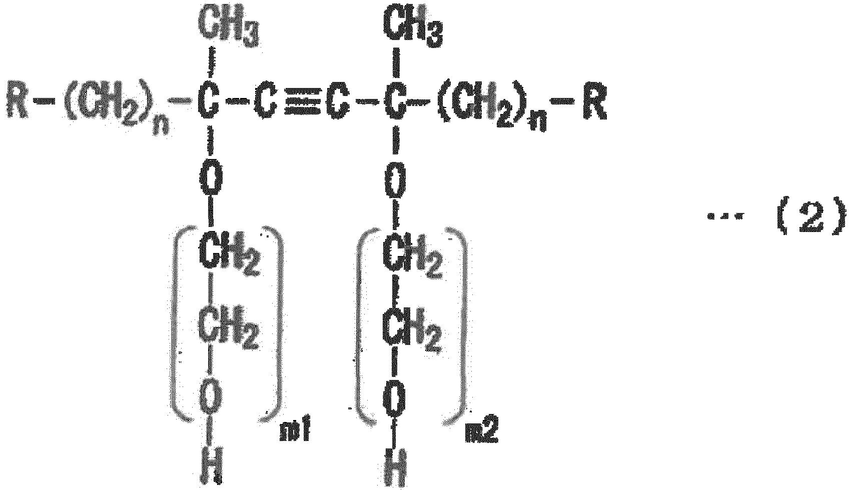 dans laquelle R est un groupe alkyle en C₂₋₄, n est 1 ou 2, et m₁ et m₂ sont chacun indépendamment un nombre de répétitions moyen de groupes oxyéthylène à condition que le total de m₁ et m₂ soit de 1 à 6.

2. Dispersion aqueuse de polytétrafluoroéthylène selon la revendication 1, qui a une viscosité allant de 3 à 300 mPa.s à 23°C.

3. Dispersion aqueuse de polytétrafluoroéthylène selon la revendication 1 ou 2, dans laquelle dans la formule (2), R est -CH(CH₃)₂.

4. Dispersion aqueuse de polytétrafluoroéthylène selon l'une quelconque des revendications 1 à 3, dans laquelle l'émulsifiant fluoré est un émulsifiant fluoré sélectionné parmi le groupe constitué d'acides carboxyliques fluorés en C₄₋₇ ayant de 1 à 4 atomes d'oxygène éthérique, et des sels de ceux-ci.

5. Dispersion aqueuse de polytétrafluoroéthylène selon l'une quelconque des revendications 1 à 4, dans laquelle dans la formule (1), le nombre d'atomes de carbone dans R¹ va de 10 à 16, et A est une chaîne de polyoxyalkylène composée d'un nombre de répétitions moyen de 7 à 12 groupes oxyéthylène et un nombre de répétitions moyen de 0 à 2 groupes oxypropylène.

6. Dispersion aqueuse de polytétrafluoroéthylène selon l'une quelconque des revendications 1 à 5, dans laquelle le tensioactif non ionique représenté par la formule (1) est contenu en une quantité de 2 à 8 parties en masse pour 100 parties en masse des particules de polytétrafluoroéthylène ci-dessus.

7. Dispersion aqueuse de polytétrafluoroéthylène selon l'une quelconque des revendications 1 à 6, dans laquelle dans la formule (2), le total de m₁ et m₂ va de 1 à 5.

8. Dispersion aqueuse de polytétrafluoroéthylène selon l'une quelconque des revendications 1 à 7, dans laquelle dans la formule (2), le total de m₁ et m₂ va de 1 à 4.

9. Dispersion aqueuse de polytétrafluoroéthylène selon l'une quelconque des revendications 1 à 8, dans laquelle le composé représenté par la formule (2) est contenu en une quantité de 0,05 à 2,0 parties en masse pour 100 parties en masse des particules de polytétrafluoroéthylène ci-dessus.

10. Dispersion aqueuse de polytétrafluoroéthylène selon l'une quelconque des revendications 1 à 9, dans laquelle dans la formule (2), n est 2, et le total de m₁ et m₂ est de 4.

11. Dispersion aqueuse de polytétrafluoroéthylène selon l'une quelconque des revendications 1 à 10, dans laquelle les particules de polytétrafluoroéthylène ci-dessus sont des particules d'un polytétrafluoroéthylène non moulable par fusion.

12. Dispersion aqueuse de polytétrafluoroéthylène selon la revendication 11, dans laquelle les particules de polytétrafluoroéthylène ci-dessus sont des particules d'un polytétrafluoroéthylène modifié, dans laquelle la teneur en unités structurelles basées sur des comonomères sur toutes les unités structurelles est au plus de 0,5 % en masse.
